# EUROPÄISCHE PATENTSCHRIFT

(11) **EP 0 670 451 B1**
(45) Veröffentlichungstag und Bekanntmachung des Hinweises auf die Patenterteilung: **06.08.1997**
(21) Anmeldenummer: 95101893.6
(22) Anmeldetag: 13.02.1995
(51) Int. Cl.: F16L 59/14, F16L 9/18

(54) **Mehrrohranordnung**
Multi-pipe assembly
Assemblage de tuyau multiple

(30) Priorität: 03.03.1994 EP 94103225
(43) Veröffentlichungstag der Anmeldung: 06.09.1995
(73) Patentinhaber: Steindl, Anton, A-3353 Seitenstetten (AT)
(72) Erfinder: Steindl, Anton, A-3353 Seitenstetten (AT)
(74) Vertreter: Säger, Manfred, Dipl.-Ing.

(56) Entgegenhaltungen:
- EP-A- 0 459 973
- DE-A- 2 236 908
- DE-A- 3 936 472
- US-A- 4 036 618

## Beschreibung

Die Erfindung betrifft eine Mehrrohranordnung, insbesondere zum Durchfluß von Medien unterschiedlicher Temperaturen mit einem ersten Rohr für das wärmere Medium und einem zweiten Rohr für das im Vergleich hierzu kältere Medium.

Zur Installation in Fernwärmenetzen werden auch sogenannte Fernwärmedoppelrohre verwendet, bei denen zwei parallel zueinander ausgerichtete Stahlrohre von einer gemeinsamen isolierenden Ummantelung umgeben sind. Die Ummantelung kann dabei aus mehreren Schichten unterschiedlichen Dämm- bzw. Isolierungsmaterials bestehen. Das erste Rohr dient dabei als Vorlaufleitung für das aufgeheizte Medium. Im Gegensatz hierzu dient das zweite Rohr als Rücklaufleitung, d.h. es führt das zu einer zentralen Heizanlage zurückfließende und abgekühlte Medium. Da die beiden Rohre somit Medien unterschiedlicher Temperaturen führen, weisen sie während des Betriebs der Fernwärmeanlage unterschiedliche Temperaturen auf, was unterschiedliche Längenausdehnungen der beiden Rohre zur Folge hat. Es hat sich gezeigt, daß die daraus resultierenden Scherspannungen zu einer Zerstörung der mit den Rohren kraftschlüssig verbundenen Ummantelung der beiden Rohre führen kann. Solche Scherspannungen können auch durch Bodenverwerfungen und Absacken des Grundes entstehen.

Um derartige Zerstörungen zu verhindern, ist es bekannt (EP-A-0 443 078) ein im Gesamtquerschnitt kreisrundes Fernwärmerohr mit zwei Mediumrohren auszubilden, die innerhalb der Wärmedämmung jeweils als Rohrwendel mit sinusförmig gebogenem Verlauf ausgebildet sind. Die jeweils an beiden Stirnseiten der Fernwärmerohre aus der Ummantelung herausragenden Enden der Mediumrohre haben einen geradlinigen Verlauf. Mit der wendelförmigen Form soll die durch unterschiedliche Temperaturen bedingte unterschiedliche Wärmedehnung der Mediumrohre anstelle einer Längenänderung zu einer Aufweitung bzw. einer Verengung der Wendel führen. Da ein solches Fernwärmerohr aufgrund der Rohrwendel einen relativ großen Gesamtradius hat, wird zur Erzielung guter Isolationswirkungen verhältnismäßig viel Wärmedämmmaterial benötigt, was jedoch sehr kostenintensiv ist. Das gleiche gilt in bezug auf die Herstellung von derartigen Rohrwendeln, die ebenfalls relativ teuer ist.

Es ist ferner eine Mehrrohranordnung bekannt (EP-A-0 459 973), bei der die Ummantelung im Querschnitt oval ist. Jedoch sind die Rohre aus Kunstststoff hergestellt, wodurch es ein flexibiles Rohrsystem für relativ kleine Nennweiten und niedrige Temperaturen bis ca. 90°C ist.

Die Aufgabe der Erfindung besteht deshalb darin, die Nachteile des Standes der Technik zu vermeiden und eine im Vergleich zu existierenden Mehrrohranordnungen einfachere Anordnung anzugeben, die bei unterschiedlicher Längendehnungen der Rohre nicht zur Zerstörung des Verbundes zwischen dem Wärmedämmaterial und den Rohren führen.

Diese Aufgabe wird bei einer Mehrrohranordnung der eingangs genannten Art durch die Merkmale des unabhängigen Patentanspruchs gelöst.

Die starren Verbindungselemente zwischen den beiden metallischen Rohren bewirken, daß trotz größerer tatsächlicher Längendifferenzen, beispielsweise des wärmeren Rohres die Enden des einen Rohres nur einen unwesentlich größeren Abstand zueinander aufweisen als das andere Rohr. Die absolute Vergrößerung seiner Länge kompensiert das wärmere Rohr durch ein im wesentlichen quer zu seiner Längsachse gerichtetes Ausweichen, wodurch große und den Verbund bzw. die die Rohre umgebende Ummantelung zerstörende Scherspannungen vermieden werden können, da somit höchstens eine unwesentliche Verschiebung des ersten Rohres gegenüber dem Dämmaterial stattfindet. Ein weiterer wesentlicher Vorteil besteht darin, daß die geringere Änderung der effektiven Länge des Rohres auch nur geringe Druckspannungen an den Verbindungsstellen aufeinanderfolgender Rohrleitungsabschnitte eines Fernwärmenetzes mit sich bringt. Die erfindungsgemäße Mehrrohranordnung kann auch für Warmwasserrohre mit Zirkulation oder auch für Kälteleitungen eingesetzt werden. Des weiteren benötigt die erfindungsgemäße Mehrrohranordnung trotz einer teilweise inneren Längenkompensation zur Erzielung mindestens gleichguter bzw. besserer Isolationswirkung aufgrund der ovalen oder birnenförmigen Querschnittsform der Mehrrohranordnung nur die gleiche Menge an Wärmedämmaterial und Mantelrohrmaterial wie herkömmliche Anordnungen ohne Längenkompensation. Erfindungsgemäße Mehrrohranordnungen können in jeder für ein Fernwärmenetz notwendigen Form ausgebildet sein, wie beispielsweise als gerades Rohr, Passrohr für Maßanschlüsse, Bögen oder Abzweigungen. Ein weiterer Vorteil liegt darin, daß die Verbindungselemente durch gleiche Abstände zu den ihnen jeweils zugewandten Enden jedes Rohres sowie zur Mitte der Rohre in Bezug auf deren Längserstreckung einen besonders günstigen Spannungsverlauf in jeder der hintereinander anzuordnenden Mehrrohranordnung und damit eine gleichmäßige Belastung der Verbindungselemente bzw. ihrer Befestigungen an den Rohren zur Folge hat.

Mit der Erfindung kann somit auf überraschend einfache Weise eine wirksame Längenkompensation und gleichzeitig eine Herabsetzung sowohl der mechanischen Beanspruchung des Verbundes zwischen den Rohren und der Ummantelung als auch der Verbindungsstellen aufeinanderfolgender Rohrleitungsabschnitte erzielt werden.

In einer bevorzugten Ausführungsform der Erfindung ist vorgesehen, daß die Verbindungselemente jeweils von einem Stahlblech gebildet sind, wobei es zweckmäßig sein kann, daß die Stahlbleche durch Schweißverbindungen mit den Rohren verbunden sind. Durch diese Maßnahmen kann auf kostengünstige und konstruktiv einfache Weise eine Längenkompensation bewirkende Fixierung der Rohre bzw. Rohrabschnitte erreicht werden.

Um den Wärmeaustausch zwischen den beiden Rohren niedrig zu halten, sowie zur Vermeidung einer Wärmebrücke kann es zweckmäßig sein, daß die Verbindungselemente jeweils ein Isolationselement mit schlechtem Wärmeleitkoeffizient aufweisen. In einer möglichen weiteren konstruktiven Ausgestaltung der Erfindung kann das Isolationselement eine Durchgangsbohrung aufweisen und sich zwischen jeweils zwei Flanschen einer Rohrverbindung befinden. Mit einer durch eine Bohrung hindurchgesteckten Schraube kann das Isolationselement dabei zwischen die Flansche gespannt werden.

Durch die erfindungsgemäße Anordnung der Verbindungselemente läßt sich eine relativ flache Biegelinie erzielen, wodurch geringe Biegespannungen im Rohr erreicht werden. Damit durch diese Ausbildung nahezug die gesamte Längenänderung kompensiert wird, können zum einen die Scherspannungen im Kontaktbereich des Wärmedämmaterials mit dem das heißere Medium führende Rohr sehr niedrig gehalten werden, zum anderen besteht praktisch keine Differenz zwischen den Abständen (effektiven Länge) der jeweiligen Enden der beiden Rohre, was die Druckspannungen zwischen aufeinanderfolgenden Rohrabschnitten weiter reduziert.

Die Erfindung wird im folgenden anhand eines in den Figuren schematisch dargestellten Ausführungsbeispiels näher erläutert. Es zeigen
- Figur 1: eine teilweise geschnittene perspektivische Darstellung einer erfindungsgemäßen Mehrrohranordnung;
- Figur 2: eine Schnittdarstellung entsprechend der Linie II-II der Fig. 1; und
- Figur 3: eine Darstellung der Mehrrohranordnung nach Fig. 1 im Betriebszustand.

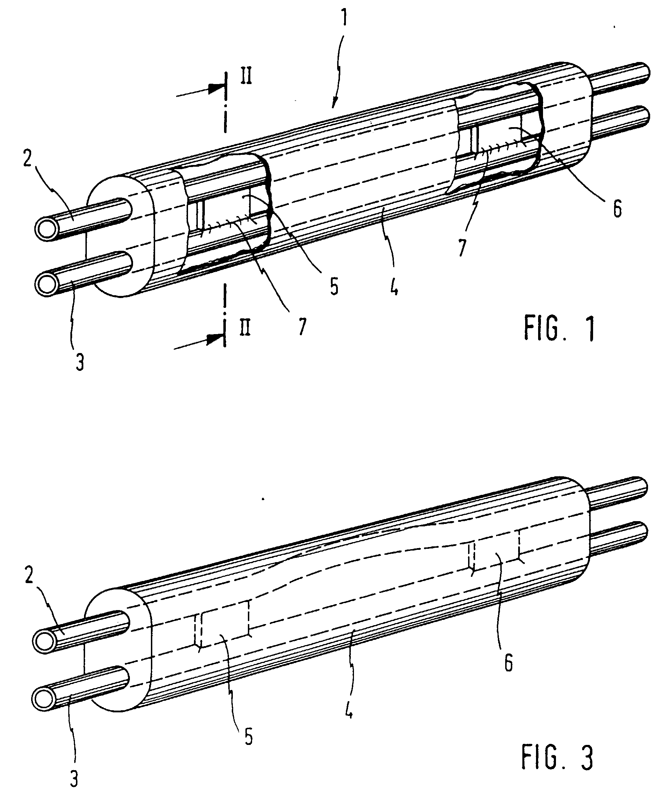

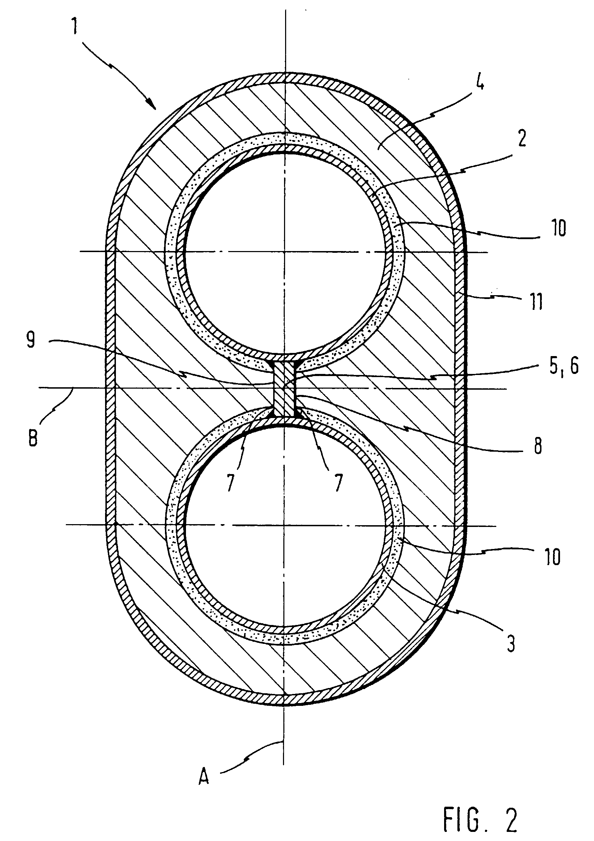

In Fig. 1 ist eine beispielsweise als Fernwärmedoppelrohr ausgebildete erfindungsgemäße Mehrrohranordnung 1 dargestellt, die zwei im wesentlichen parallel zueinander verlaufende vorisolierte Stahlrohre 2, 3 als Medienrohre aufweist, die eine Länge bis zu jeweils ca. 12 m aufweisen können. Das Rohr 2 führt dabei das heiße Medium, während das Rohr 3 das demgegenüber kältere Medium führt. Die beiden Rohre 2, 3 sind - siehe auch Fig. 2 - im bestimmten vertikalen Abstand zueinander angeordnet und sind von einer isolierenden, im Querschnitt ovalen oder birnenförmigen Ummantelung 4 umgeben, wobei lediglich ihre Enden um einen bestimmten Betrag gegenüber der Ummantelung 4 vorstehen.

Die beiden Rohre 2, 3 sind durch an ihren Mantelflächen, beispielsweise durch Schweißen befestigte Verbindungselemente, die von Stahlblechen 5, 6 gebildet sind, miteinander verbunden. Die Verbindung zwischen den Rohren 2, 3 einerseits und den Stahlblechen 5, 6 andererseits erfolgt entlang der Längskanten 7 der beiden Stahlbleche 5, 6. Die Stahlbleche 5, 6 sind dabei so ausgerichtet, daß ihre zu ihren Oberflächen 8, 9 parallele Symmetrieebene in etwa in der durch die Längsachsen der beiden Rohre 2, 3 aufgespannten imaginären Ebene liegt. Des weiteren weisen die Stahlbleche 5, 6 sowohl von den Enden der beiden Rohre 2, 3 als auch deren Mitte in Bezug auf deren Längserstreckung den gleichen Abstand auf. Somit ist die Mehrrohranordnung sowohl zur Ebene A als auch zur Ebene B (siehe Fig. 2) symmetrisch aufgebaut.

Die Rohre 2, 3 sind mit einem sie unmittelbar umgebenden PUR-Schaum 10 der Ummantelung 4 verbundverschäumt. Ein Mantelrohr 11 aus HPDE ist wiederum um den PUR-Schaum 4 angeordnet und schützt in vor äußeren Einflüssen. Wie insbesondere in Fig. 2 zu erkennen ist, setzt sich die Querschnittskontur des Mantelrohres aus zwei Halbkreisen zusammen, die durch zwei geradlinige Abschnitte miteinander verbunden sind. Die Rohre 2, 3 sind dabei in der Ummantelung 4 so angeordnet, daß ihre Mittelpunkte mit denjenigen der ihnen jeweils zugewandten Halbkreise des Mantelrohres zusammenfallen. Dadurch ergibt sich insgesamt gegenüber den sonst üblicherweise verwendeten kreisrunden Mantelrohren eine besonders gleichmäßige Wärmedämmung, bzw. ein wesentlich geringerer Wärmeverlust.

Die Mehrrohranordnung 1 kann in Fernwärmenetzen zum Einsatz kommen, bei denen die Temperatur des Heizmediums im Rohr 2 (Vorlaufrohr) ca. 120°C und im Rohr 3 (Rücklaufrohr) ca. 60°C beträgt. Selbstverständlich können erfindungsgemäße Mehrrohranordnungen auch bei anderen als diesen Temperaturen insbesondere bei höheren Temperaturen der Vorlaufleitung eingesetzt werden. Bei der Inbetriebnahme eines solchen Fernwärmenetzes werden sich die beiden Rohre 2, 3 zunächst in etwa gleichmäßig auf 60°C erwärmen, wodurch auch die Längenausdehnung beider Rohre gleich ist. Die weitere Temperaturbeaufschlagung des Rohres 2 auf seine Betriebstemperatur von ca. 120°C führt zu einer weiteren tatsächlichen Längenausdehnung. Da das Rohr 2 aber durch die beiden Verbindungselemente (Stahlbleche 6, 7) am zweiten Rohr fixiert ist, wird der größte Teil der axialen Längenänderung des zwischen den Stahlblechen 6, 7 gelegenen Abschnittes des Rohres 2 durch eine zu dessen Längsachse im wesentlichen quergerichtete Ausweichbewegung kompensiert (siehe Fig. 3). Bei dem in Fig. 3 stark übertrieben dargestellten Ausführungsbeispiel beträgt der Abstand der Längsachse des gekrümmten Rohres 2 von dessen ursprünglichen Verlauf ca. 2,8 mm was eine elastische und somit unkritische Verformung des Rohres 2 darstellt. Durch diese Anordnung erfahren jeweils nur die relativ kurzen Bereiche zwischen den Stahlblechen 6, 7 und den ihnen zugewandten Enden der Rohre 2, 3 eine sich auf deren effektive Länge auswirkende Längenänderung. Somit ändert sich auch deren effektive Gesamtlänge nur unwesentlich, wodurch keine den Verbund zwischen dem PUR-Schaum und dem Mediumrohr 2 schädlichen Scherspannungen auftreten.

## Patentansprüche

1. Mehrrohranordnung, insbesondere zum Durchfluß von Medien unterschiedlicher Temperaturen mit einem ersten Rohr (2), beispielsweise für das wärmere Medium und einem zweiten Rohr (3), beispielsweise für das demgegenüber kältere Medium, bei dem die Rohre (2, 3) aus Metall bestehen und mit einem über die nahezu gesamte Rohrlänge im wesentlichen gleichen Abstand zueinander innerhalb einer im Querschnitt oval oder birnenförmig ausgbildeten isolierenden Ummantelung (4) angeordnet und mit mindestens zwei an ihren Mantelflächen befestigten Verbindungselementen (5, 6) starr miteinander verbunden sind, so daß beispielsweise durch eine unterschiedliche Längendifferenz der beiden Rohre die durch die Temperaturdifferenz hervorgerufene Längendehnung des ersten Rohres (2) zu einem im wesentlichen quer zu dessen Längsachse gerichteten Ausweichen des jeweils zwischen den Verbindungselementen gelegenen Rohrabschnittes führt, wobei der Abstand der beiden Verbindungselemente voneinander doppelt so groß ist, wie die Summe der Abstände jedes Verbindungselementes zu dem nächstbenachbarten Ende jedes Rohrs (2, 3).

2. Mehrrohranordnung nach Anspruch 1, dadurch gekennzeichnet, daß bei dem die Verbindungselemente von mindestens zwei Stahlblechen (5, 6) gebildet sind.

3. Mehrrohranordnung nach einem Ansprüche 1 oder 2, dadurch gekennzeichnet, daß die Verbindungselemente von einem rechtwinklig zu den Rohren (2, 3) verlaufenden Rohrabschnitt gebildet sind, der an seinen beiden Enden an die Mantelfläche der beiden Rohre (2, 3) angepaßt ist.

4. Mehrrohranordnung nach einem der vorhergehenden Ansprüche, bei dem die Stahlbleche (5, 6) durch Schweißverbindungen an den Rohren (2, 3) befestigt sind.

5. Mehrrohranordnung nach einem der vorhergehenden Ansprüche, bei dem der Abstand jedes Verbindungselementes (5, 6) zur Mitte des ersten bzw. zweiten Rohres (2) in bezug auf dessen Längsrichtung sowie zum nächstbenachbarten Ende der Rohre (2, 3) im wesentlichen gleich sind.

6. Mehrrohranordnung nach einem der vorhergehenden Ansprüche, bei dem die Verbindungselemente jeweils mit einer wärmeisolierenden Ummantelung versehen sind.

7. Mehrrohranordnung nach einem der vorhergehenden Ansprüche, bei dem die Ummantelung (4) ein Mantelrohr (11), z.B. aus HDPE aufweist, und durch PUR-Schaum kraftschlüssig mit den Rohren verbunden ist.

8. Mehrrohranordnung nach einem der Ansprüche 1 bis 7, dadurch gekennzeichnet, daß das Metall der Rohre (2, 3) Stahl und/oder Kupfer ist.

## Claims

1. A multi-pipe assembly, in particular for the through-flow of media at different temperatures comprising a first pipe (2), for example for the hotter medium, and a second pipe (3), for example for the medium which is colder than same, wherein the pipes (2, 3) comprise metal and are arranged at a spacing relative to each other which is substantially equal over virtually the entire pipe length within an insulating casing (4) of oval or pear-shaped cross-section and are rigidly connected together with at least two connecting elements (5, 6) which are fixed to their peripheral surfaces so that for example due to a differing length difference in respect of the two pipes the lengthwise expansion of the first pipe (2) caused by the temperature difference results in a deflection, directed substantially transversely to the longitudinal axis of the first pipe, of the respective pipe portion between the connecting elements, the spacing of the two connecting elements from each other being twice as great as the sum of the spacings of each connecting element relative to the next adjacent end of each pipe (2, 3).

2. A multi-pipe assembly according to claim 1 characterised in that the connecting elements are formed by at least two steel plates (5, 6).

3. A multi-pipe assembly according to one of claims 1 and 2 characterised in that the connecting elements are formed by a pipe portion which extends at a right angle to the pipes (2, 3) and which is adapted at its two ends to the peripheral surface of the two pipes (2, 3).

4. A multi-pipe assembly according to one of the preceding claims wherein the steel plates (5, 6) are fixed to the pipes (2, 3) by welded connections.

5. A multi-pipe assembly according to one of the preceding claims wherein the spacing of each connecting element (5, 6) relative to the centre of the first and second pipe (2) respectively in relation to the longitudinal direction thereof and relative to the next adjacent end of the pipes (2, 3) are substantially equal.

6. A multi-pipe assembly according to one of the preceding claims wherein the connecting elements are each provided with a respective heat-insulating casing.

7. A multi-pipe assembly according to one of the preceding claims wherein the casing (4) has a casing tube (11), for example of HDPE, and is force-lockingly connected to the pipes by PUR-foam.

8. A multi-pipe assembly according to one of claims 1 to 7 characterised in that the metal of the pipes (2, 3) is steel and/or copper.

## Revendications

1. Agencement à tubes multiples, destiné notamment au passage de fluides de températures différentes, comportant un premier tube (2), par exemple pour le fluide le plus chaud, et un deuxième tube (3), par exemple pour le fluide plus froid que le premier, lesdits tubes (2, 3) étant constitués en métal et disposés, à une distance réciproque sensiblement égale sur pratiquement toute leur longueur à l'intérieur d'un gainage (4) isolant à section transversale ovale ou en forme de poire, et reliés rigidement l'un à l'autre par au moins deux éléments de liaison (5, 6) fixés sur leurs faces enveloppantes, de telle sorte que, par exemple, suite à une différence de longueur entre les deux tubes, la dilatation longitudinale du premier tube (2) provoquée par la différence de température, a pour effet un écartement, sensiblement transversal par rapport à son axe longitudinal, de la section tubulaire située entre respectivement les deux éléments de liaison, la distance entre les deux éléments de liaison étant égale au double de la somme des distances entre chacun des éléments de liaison et l'extrémité la plus proche de chacun des tubes (2, 3).

2. Agencement à tubes multiples selon la revendication 1, caractérisé en ce que les éléments de liaison sont constitués d'au moins deux tôles d'acier (5, 6).

3. Agencement à tubes multiples selon l'une des revendications 1 ou 2, caractérisé en ce que les éléments de liaison sont constitués d'une section tubulaire s'étendant perpendiculairement aux tubes (2, 3), les deux extrémités de cette section tubulaire étant ajustées sur la face enveloppante des deux tubes (2, 3).

4. Agencement à tubes multiples selon l'une des revendications précédentes, dans lequel des tôles d'acier (5, 6) sont fixées sur les tubes (2, 3) par des soudures.

5. Agencement à tubes multiples selon l'une des revendications précédentes, dans lequel les distances entre chacun des éléments de liaison (5, 6) et le centre du premier ou du deuxième tube (2) respectivement, sont sensiblement égales par rapport à sa direction longitudinale ainsi que par rapport à l'extrémité la plus proche des tubes (2, 3).

6. Agencement à tubes multiples selon l'une des revendications précédentes, dans lequel les éléments de liaison sont munis respectivement d'un gainage thermiquement isolant.

7. Agencement à tubes multiples selon l'une des revendications précédentes, dans lequel le gainage (4) présente une gaine tubulaire (11), par exemple en PEhd, et est solidarisé avec les tubes par de la mousse PUR.

8. Agencement à tubes multiples selon l'une des revendications 1 à 7, caractérisé en ce que le métal du tube est de l'acier ou du cuivre.
